# EUROPÄISCHE PATENTSCHRIFT

(11) **EP 1 351 475 B1**
(45) Veröffentlichungstag und Bekanntmachung des Hinweises auf die Patenterteilung: **08.06.2016**
(21) Anmeldenummer: 03002267.7
(22) Anmeldetag: 01.02.2003
(51) Int. Cl.: H04M 3/42, H04M 3/436, H04M 15/00, H04M 3/533

(54) **ZUGRIFF AUF DEN INHALT EINER SPRACHNACHRICHT ÜBER EINE KURZE NACHRICHT.**
ACCESS TO THE CONTENT OF A VOICE MESSAGE THROUGH A SHORT MESSAGE
ACCÈS AU CONTENU D'UN MESSAGE VOCAL PAR UN MESSAGE COURT

(30) Priorität: 04.04.2002 DE 10214842
(43) Veröffentlichungstag der Anmeldung: 08.10.2003
(73) Patentinhaber: Deutsche Telekom AG, 53113 Bonn (DE)
(72) Erfinder: Bertram, Lutz, 12159 Berlin (DE); Bindel, Frank, 53639 Königswinter (DE); Trinkel, Marian, 52372 Kreuzau OT Untermaubach (DE)
(74) Vertreter: Cohausz Hannig Borkowski Wißgott

(56) Entgegenhaltungen:
- US-B1- 6 192 111
- SCHMANDT C: "PHONESHELL: THE TELEPHONE AS COMPUTER TERMINAL" PROCEEDINGS OF FIRST ACM INTERNATIONAL CONFERENCE ON MULTIMEDIA, 2-6 AUGUST 1993, ANAHEIM, CA, US, NEW YORK, NY, US, Januar 1993 (1993-01), Seiten 373-381, XP000472830
- KOUMPIS K ET AL: "TRANSCRIPTION AND SUMMARIZATION OF VOICEMAIL SPEECH" PROCEEDINGS OF THE INTERNATIONAL CONFERENCE ON SPOKEN LANGUAGE PROCESSING, Bd. 2, 2000, Seiten 688-691, XP001158904
- JANSCHE M ET AL: "INFORMATION EXTRACTION FROM VOICEMAIL TRANSCRIPTS" PROCEEDINGS OF EMNPL, 2002, Seiten 1-8, XP001150674

## Beschreibung

Die vorliegende Erfindung betrifft ein Verfahren zur automatischen Darbietung von Nachrichten, die von einem Absender über ein Kommunikationsnetz, insbesondere ein Telefonnetz oder das Internet, an einen Adressaten geschickt werden, wobei die Nachrichten in einem Speicher zum späteren Abruf durch den Adressaten zwischengespeichert werden, wobei die zwischenzuspeichernden Nachrichten von einem Programm auf ihren Informationsgehalt untersucht werden und der Informationsgehalt einer Nachricht in einer Kurznachricht zusammengefasst wird, die dem Adressaten zum unmittelbaren Abruf zur Verfügung gestellt wird, wobei eine erzeugte und zwischengespeicherte Kurznachricht eine geringere Datenmenge umfasst als die entsprechende Nachricht und die Nachricht eine Sprachnachricht ist, die vor der inhaltlichen Komprimierung von einem Programm zur Sprachkonvertierung in eine Textdatei umgewandelt wird. Zudem betrifft die Erfindung ein System zur Umsetzung des Verfahrens.

Die Zwischenspeicherung einer Nachricht beispielsweise in einer Mail-Box oder einer Mobilbox ist bekannt. Dabei sind Mobil-Boxen mitunter zentral organisiert und speichern die empfangenen Nachrichten zum Abruf in einem an das Netz angeschlossenen Server. Mail-Boxen können hingegen dezentral organisiert und im Speicher eines Endgerätes eingerichtet sein. Gerade bei den in letzter Zeit bekannt gewordenen mobilen "Pocket-PC's", die wie Handys ständig mitgeführt werden können, kommt es bei den vergleichsweise kleinen Speicherkapazitäten zu einer unnötigen Speicherbelastung und bei einer Vielzahl zu verwaltender Nachrichten zu einem unübersichtlichen Chaos. Dies ist insbesondere der Fall, wenn die eingegangenen Nachrichten nach der Entgegennahme nicht gelöscht werden. Die bekannten automatischen Löschservices löschen den Speicher ohne Rücksicht auf den Inhalt der Nachricht, so dass mitunter wichtige Informationen verloren gehen.

Ein Verfahren der genannten Art, sowie ein System zu dessen Durchführung ist z.B. bekannt aus dem Dokument von Koumpis, K. et al: "TRANSCRIPTION AND SUMMARIZATION OF VOICEMAIL SPEECH", Proceedings of the international conference on spoken language processing, Bd. 2, 2000, Seiten 688-691, XP001158904.

Aufgabe der Erfindung ist es daher, ein Verfahren zur Verwaltung derartiger Nachrichten zu schaffen, das sich mit einfachen Mitteln umsetzen lässt und das bei hohem Komfort für den Adressaten als Kunden zuverlässig arbeitet, wobei es den Adressaten bei der Organisation des Speicherinhaltes unterstützt. Zudem soll ein System zur Umsetzung des Verfahrens geschaffen werden.

Diese Aufgaben werden durch das Verfahren mit den kennzeichnenden Merkmalen des Anspruch 1 und das System nach Anspruch 9 gelöst.

Der Kerngedanke der Erfindung liegt darin, die zwischenzuspeichernden Nachrichten dem Adressaten in zusammengefasster Form zur Verfügung zu stellen, um ihm so einerseits das Durchlesen und Bewerten, also die Organisation der Nachrichten, zu erleichtern und um andererseits die Speicherkapazität seines Empfangs- oder Endgerätes nicht unnötig zu belasten. Zur Zusammenfassung werden die Nachrichten von einem Programm auf ihren Informationsgehalt hin automatisch untersucht.

Das dazu eingesetzte Programm kann dabei mehr oder weniger aufwendig sein. In einer einfachen Version pickt es lediglich bestimmte Schlüsselwörter aus dem Text, wobei die Schlüsselwörter entweder anhand ihrer Stellung innerhalb der Nachricht oder durch Vergleich mit einer Liste enthaltend vorgebbare Schlüsselwörter erkannt werden. Die Zusammenfassung der Nachricht ist dann lediglich eine Liste der entnommenen Schlüsselwörter, wobei die Schlüsselwörter die aus der Nachricht extrahierte Information tragen. Eine solche Suche ist relativ einfach. Aufwendiger ist eine Suche nach relevanten Mustern und Strukturen zur Auffindung von Zusammenhängen (Datamining), die in die Kurznachricht geschrieben werden können. Für eine "intelligente" Suche versteht das Programm den Inhalt der Nachricht in gewisser Hinsicht und setzt den Sinn, also die für den Adressaten wichtige Information, in der Kurznachricht um. Derartige "verstehende" Programme sind bereits bekannt.

Nach dem erfindungsgemäßen Erfassen des Informationsgehaltes wird die Nachricht in einer Kurznachricht zusammengefasst und dadurch komprimiert, die dem Adressaten zum unmittelbaren Abruf zur Verfügung gestellt wird. Dabei zeichnet es die Kurznachricht aus, dass ihre Datenmenge, also der von ihr benötigte Speicherplatz, wesentlich geringer ist, als die der ursprünglichen Nachricht.

Besonders vorteilhaft ist es, wenn ein an das Netz angeschlossener zentraler Computer (Server) zur Verfügung steht, auf den zunächst die Nachrichten eingehen und in dessen Speicher sie gespeichert werden. An dieser Stelle werden die Nachrichten auf den Inhalt untersucht und zu Kurznachrichten komprimiert. Die Kurznachrichten können dann über das Netz in einen Speicher des Endgerätes des Kunden, beispielsweise in seinen (mobilen) PC oder ein mobiles Telefon, geschickt und dort dezentral gespeichert werden. Um die Speicherkapazität noch weiter zu entlasten ist es zudem vorteilhaft, wenn auch die Kurznachrichten zentral in Server gespeichert werden und der Adressat lediglich die Information gesendet bekommt, dass er eine oder mehrere Nachrichten erhalten hat.

Die Erfindung gibt dem Adressaten, nachdem er die Kurznachricht gelesen und für interessant befunden hat, auch die Möglichkeit, die komplette Nachricht anzusehen, wofür in Verbindung mit der Kurznachricht ein Zeiger (Pointer) auf den Speicherplatz der ursprünglichen Nachricht gespeichert wird, über den der Adressat von der empfangenen Kurznachricht auf den vollständigen Inhalt der Nachricht zurückgreifen kann. Um Nachrichten nicht mehrfach zwischenzuspeichern wird in einer besonderen Ausführungsform ein Pointer auf den "Inhalt" der Nachricht gesetzt und bezieht sich somit auf den Urinhalt. Für den Adressaten ist die programmtechnische Realisierung natürlich uninteressant. Er bekommt lediglich zusammen mit der Kurznachricht die Option "Nachricht lesen", nach deren Anwahl ihm der komplette Text der ursprünglichen Nachricht präsentiert wird.

Zunächst ist es nicht entscheidend, welcher Art die eingehende Nachricht ist. Sie kann eine vom Absender auf die Mobilbox gesprochene Sprachnachricht oder eine in digitalem Code vorliegende Textnachricht, insbesondere eine E-Mail oder eine SMS-Nachricht (Short Message System) sein. Um eine in Sprachform vorliegende Nachricht umzusetzen, ist es erfindungsgemäß vorgesehen, dass diese vor der inhaltlichen Komprimierung von einem Programm zur Sprachkonvertierung in eine Textdatei umgewandelt wird. Diese Textnachricht kann dann durch das "verstehende" Programm bearbeitet werden. Die Zusammenfassung kann dabei für den Adressaten als geschriebener Text oder als vom Text konvertierte Sprache dargestellt werden.

Bei der Flut von eingehenden Nachrichten kann es sinnvoll sein, den Adressaten wenigstens von einem Teil der Nachrichten zu bewahren. Dazu wird der Inhalt der Nachricht bewertet und die Nachricht bei negativer Bewertung verworfen. Die Bewertung kann auf unterschiedliche Art und Weise vorgenommen werden. Es ist sicherlich vorteilhaft, wenn vom Adressaten selber gewisse Kriterien für die inhaltliche Bewertung vorgebbar sind. Das kann durch die Vorgabe bestimmter Schlüsselwörter geschehen, bei deren Auftreten die Nachricht ungelesen verworfen wird. Sicherlich ist es auch vorteilhaft, über die Adresse den Absender der Nachricht zu identifizieren, um bestimmte vorgegebene Absender im vorhinein ausschließen zu können. In der Kurznachricht wird dann beispielsweise der Name des Absenders gespeichert und dem Adressaten zur Verfügung gestellt.

In einer fortgeschrittenen Stufe könnte das Programm selber so "intelligent" sein, dass es den Inhalt der Nachricht erfasst und als uninteressant klassifiziert. Zu dieser "Intelligenz" kann es durch einen Lernprozess gekommen sein, indem es die Inhalte der ungelesen verworfenen Nachrichten registriert und daraus den Willen des Adressaten erkannt hat. Entspricht nun der Inhalt einer Nachricht nicht dem vermeintlichen Willen des Adressaten, so wird sie verworfen.

Ein Vorteil der Erfindung liegt in dem Mehrwert für den Netzbetreiber, der sich den Service bezahlen lassen kann, indem er beispielsweise den Speicherplatz im Server vermietet. Der Kunde hat einen Mehrwert dadurch, dass er keine Netzgebühren für das unnötige Lesen langer uninteressanter Nachrichten aufwenden muss. Ein weiterer Vorteil kann dem Kunden durch den Netzbetreiber dadurch geboten werden, dass der Adressat nur den Abruf der vollständigen Nachricht bezahlt, während die Übersendung der Kurznachrichten günstiger ist. So können die Kosten für den Kunden gering gehalten werden und der Netzbetreiber macht den Kauf des Service für den Kunden attraktiv.

## Patentansprüche

1. Verfahren zur automatischen Darbietung von Nachrichten, die von einem Absender über ein Kommunikationsnetz an einen Adressaten geschickt werden, wobei die Nachrichten in einem Speicher zum späteren Abruf durch den Adressaten zwischengespeichert werden, wobei die zwischenzuspeichernden Nachrichten von einem Programm auf ihren Informationsgehalt untersucht werden und der Informationsgehalt einer Nachricht in einer Kurznachricht zusammengefasst wird, die dem Adressaten zum unmittelbaren Abruf zur Verfügung gestellt wird, wobei eine erzeugte und zwischengespeicherte Kurznachricht eine geringere Datenmenge umfasst als die entsprechende Nachricht und die Nachricht eine Sprachnachricht ist, die vor der inhaltlichen Komprimierung von einem Programm zur Sprachkonvertierung in eine Textdatei umgewandelt wird, **dadurch gekennzeichnet, dass** in Verbindung mit der Kurznachricht ein Zeiger auf den Speicherplatz der Nachricht gespeichert wird, über den der Adressat von der empfangenen Kurznachricht auf den vollständigen Inhalt der Nachricht zurückgreifen kann.

2. Verfahren nach Anspruch 1, **dadurch gekennzeichnet, dass** der Speicher Teil eines an das Netz angeschlossenen zentralen Computers ist.

3. Verfahren nach einem der vorherigen Ansprüche, **dadurch gekennzeichnet, dass** die Nachricht auf Schlüsselwörter untersucht wird, die in die Kurznachricht geschrieben werden.

4. Verfahren nach einem der vorherigen Ansprüche, **dadurch gekennzeichnet, dass** die Nachricht auf Muster und Strukturen durchsucht wird und die gefundenen Zusammenhänge in die Kurznachricht geschrieben werden.

5. Verfahren nach einem der vorherigen Ansprüche, **dadurch gekennzeichnet, dass** die Kurznachrichten an ein dem Adressaten zur Verfügung stehendes Endgerät, insbesondere einen Computer oder ein mobiles Telefon, geschickt und in einem Speicher des Endgerätes dezentral gespeichert werden.

6. Verfahren nach einem der vorherigen Ansprüche, **dadurch gekennzeichnet, dass** der Inhalt der Nachricht bewertet und die Nachricht bei negativer Bewertung verworfen wird, wobei es dem Adressaten möglich ist, Kriterien für die inhaltliche Bewertung vorzugeben.

7. Verfahren nach einem der vorherigen Ansprüche, **dadurch gekennzeichnet, dass** in der Kurznachricht der Name des Urhebers gespeichert und dem Adressaten zur Verfügung gestellt wird.

8. Verfahren nach einem der vorherigen Ansprüche, **dadurch gekennzeichnet, dass** die zusammengefasste Kurznachricht als vom Text konvertierte Sprache dargestellt wird.

9. System, das eingerichtet ist zur Umsetzung des Verfahrens nach einem der vorherigen Ansprüche, aufweisend ein Kommunikationsnetz mit daran angeschlossenen Endgeräten und einem daran angeschlossenen zentralen Computer, auf dem ein Programm zur Untersuchung und Zusammenfassung von Nachrichten realisiert ist, wobei die Nachricht eine Sprachnachricht ist und das System eingerichtet ist, die Sprachnachricht vor der inhaltlichen Komprimierung von einem Programm zur Sprachkonvertierung in eine Textdatei umzuwandeln **dadurch gekennzeichnet dass** das System eingerichtet ist in Verbindung mit der Kurznachricht einen Zeiger auf den Speicherplatz der Nachricht zu speichern, über den der Adressat von der empfangenen Kurznachricht auf den vollständigen Inhalt der Nachricht zurückgreifen kann.

## Claims

1. Method for automatically presenting messages that are sent by a sender to an addressee via a communication network, wherein the messages are buffer-stored in a memory for later retrieval by the addressee, wherein the messages to be buffer-stored are examined for their information content by a program and the information content of a message is summarized in a short message that is made available to the addressee for immediate retrieval, wherein a generated and buffer-stored short message comprises a smaller volume of data than the corresponding message and the message is a voice message that is converted into a text file by a program for voice conversion prior to the content compression, **characterized in that** a pointer to the memory location of the message is stored in conjunction with the short message, said pointer being able to be used by the addressee of the received short message to resort to the complete content of the message.

2. Method according to Claim 1, **characterized in that** the memory is part of a central computer connected to the network.

3. Method according to either of the preceding claims, **characterized in that** the message is examined for keywords that are written into the short message.

4. Method according to one of the preceding claims, **characterized in that** the message is searched for patterns and structures and the correlations found are written into the short message.

5. Method according to one of the preceding claims, **characterized in that** the short messages are sent to a terminal, particularly a computer or a mobile telephone, that is available to the addressee and are stored locally in a memory of the terminal.

6. Method according to one of the preceding claims, **characterized in that** the content of the message is rated and the message is rejected in the event of negative rating, it being possible for the addressee to prescribe criteria for the content rating.

7. Method according to one of the preceding claims, **characterized in that** the name of the originator is stored in the short message and made available to the addressee.

8. Method according to one of the preceding claims, **characterized in that** the summarized short message is represented as speech converted from the text.

9. System that is set up to implement the method according to one of the preceding claims, having a communication network with terminals connected thereto and a central computer connected thereto on which a program for examining and summarizing messages is provided, wherein the message is a voice message and the system is set up to convert the voice message into a text file using a program for voice conversion prior to the content compression, **characterized in that** the system is set up to store a pointer to the memory location of the message in conjunction with the short message, said pointer being able to be used by the addressee of the received short message to resort to the complete content of the message.

## Revendications

1. Procédé de présentation automatique de messages qui sont envoyés par un émetteur à un destinataire par le biais d'un réseau de communication, les messages étant enregistrés temporairement dans une mémoire en vue d'être interrogés ultérieurement par le destinataire, les messages enregistrés temporairement étant analysés par un programme en vue de connaître leur contenu d'information et le contenu d'information d'un message étant résumé dans un message court qui est mis à la disposition du destinataire en vue d'une interrogation directe, un message court généré et enregistré temporairement comprenant un volume de données plus fable que le message correspondant et le message étant un message vocal qui est converti en un message textuel avant la compression du contenu par un programme de conversion vocale, **caractérisé en ce qu'**un pointeur vers l'emplacement de mémoire du message est enregistré en association avec le message court, pointeur par le biais duquel le destinataire du message court reçu peut accéder à la totalité du contenu du message.

2. Procédé selon la revendication 1, **caractérisé en ce que** la mémoire fait partie d'un ordinateur central raccordé au réseau.

3. Procédé selon l'une des revendications précédentes, **caractérisé en ce que** le message est analysé à la recherche de mots-clés qui sont décrits dans le message court.

4. Procédé selon l'une des revendications précédentes, **caractérisé en ce que** le message est analysé à la recherche de modèles et de structures et les associations trouvées sont décrites dans le message court.

5. Procédé selon l'une des revendications précédentes, **caractérisé en ce que** les messages courts sont envoyés à un terminal qui est à la disposition du destinataire, notamment un ordinateur ou un téléphone mobile, puis enregistrés de manière décentralisée dans une mémoire du terminal.

6. Procédé selon l'une des revendications précédentes, **caractérisé en ce que** le contenu du message est évalué et, en cas d'évaluation négative, le message est rejeté, le destinataire ayant la possibilité de prédéfinir des critères pour l'évaluation du contenu.

7. Procédé selon l'une des revendications précédentes, **caractérisé en ce que** le nom de l'auteur est enregistré dans le message court et mis à disposition du destinataire.

8. Procédé selon l'une des revendications précédentes, **caractérisé en ce que** le message court résumé est présenté en tant que parole convertie à partir du texte.

9. Système, conçu pour mettre en oeuvre le procédé selon l'une des revendications précédentes, comprenant un réseau de communication auquel sont connectés des terminaux et auquel est connecté un ordinateur central sur lequel est réalisé un programme destiné à analyser et à résumer des messages, le message étant un message vocal et le système étant conçu pour convertir le message vocal en un message textuel avant la compression du contenu par un programme de conversion vocale, **caractérisé en ce que** le système est conçu pour enregistrer un pointeur vers l'emplacement de mémoire du message en association avec le message court, pointeur par le biais duquel le destinataire du message court reçu peut accéder à la totalité du contenu du message.
